# EUROPÄISCHE PATENTANMELDUNG

(11) **EP 0 733 514 A1**
(43) Veröffentlichungstag der Anmeldung: **25.09.1996**
(21) Anmeldenummer: 96104084.7
(22) Anmeldetag: 15.03.1996
(51) Int. Cl.: B60R 21/20

(54) **Sicherheitslenkrad**

(30) Priorität: 24.03.1995 DE 19510418
(71) Anmelder: MST Automotive GmbH Automobil-Sicherheitstechnik, D-63743 Aschaffenburg (DE)
(72) Erfinder: Werner, Heribert, 63796 Kahl (DE); Grosser, Werner, 63834 Sulzbach (DE); Thein, Thomas, 97526 Sennfeld (DE)
(74) Vertreter: Fuchs, Luderschmidt & Partner

(57) **Zusammenfassung**

Bei dem Lenkrad, dessen Nabe (2) gegenüber der Ebene des Kranzes (3) versenkt ist, bestehen die Speichen jeweils aus einem mit dem Kranz (3) und einem mit der Nabe (2) verbundenen Abschnitt (4,5). Die freien Enden der Speichenabschnitte (4,5) sind mittels Formschluß- oder Schraubverbindungen miteinander verspannt. Der Kranz (3) und die an diesen angrenzenden Bereiche der mit dem Kranz (3) verbundenen Speichenabschnitte (4) besitzen eine Ummantelung (8), die stoffschlüssig in die Abdeckkappe (10) für die in dem Lenkrad integrierte Airbag-Baueinheit übergeht.

## Beschreibung

Die Erfindung betrifft ein Sicherheitslenkrad für Straßenfahrzeuge, insbesondere für Personenkraftwagen, bei dem die Nabe gegenüber der Ebene des Kranzes versenkt und in das eine Airbag-Baueinheit bestehend aus einem Gasgenerator, einem mit dem Gasgenerator verbundenen an den Speichen befestigtes Trägerelement, einem auf und/oder um den Gasgenerator eingefalteten Gassack und einem mit dem Trägerelement verspannten den Gassack mit der die Gasdurchtrittsöffnung begrenzenden Randzone festklemmenden Flansch integriert ist, wobei der Kranz und die an den Kranz angrenzenden Bereiche der Speichen eine Ummantelung und die Airbag-Baueinheit eine kappenförmige Abdeckung aus Thermoplast, Polyurethan oder thermoplastischem Elastomeren besitzen.

Der Forderung, wonach die Verletzungsschwere der Insassen von Straßenfahrzeugen, insbesondere von Personenkraftwagen, durch einen Unfall durch Anordnung passiver Sicherheitsmaßnahmen so Klein wie möglich zu halten ist, wird insbesondere die im Lenkrad des Fahrzeuges integrierte und ggf. auch auf der Beifahrerseite hinter der Armaturentafel eingebaute Gassack-Aufprallschutz-Baueinheit gerecht. Eine solche Gassack-Aufprallschutz-Baueinheit ist im wesentlichen aus einem Gasgenerator, einem Generatorträger und einem an oder um den Gasgenerator eingefalteten Gassack aufgebaut. Der Generatorträger hat außerdem die Aufgabe, das Flanschblech zur Befestigung des Gassacks im Bereich der die Gaseintrittsöffnung begrenzenden Randzone aufzunehmen. Eine rund um den Generatorträger angeordnete Klammerleiste hält die im allgemeinen aus Polyurethan-Integralschaum oder einem thermoplastischen Elastomeren bestehende Abdeckung für den Gassack fest. Bei einem möglichen Aufprall auf ein massives Hindernis sprechen Beschleunigungsaufnehmer an, die im Frontteil und/oder im Fahrgastraum untergebracht sind. Nach wenigen Millisekunden beginnt der Gassack, sich aufzublasen, indem der Zündstrom auf den Zünder des Gasgenerators geschaltet wird, der wiederum die Zündpille und damit den Treibsatz zündet, so daß nach 40 bis 50 ms der Oberkörper des Insassen auf den voll aufgeblasenen Gassack auftrifft und der Insasse damit unverzüglich an der Fahrzeugverzögerung teilnimmt, wobei eine erträgliche gleichmäßige Beschleunigung während der Verzögerungszeit wirkt (DE-B-2 347 255). Nachteilig ist jedoch, daß bei einem solchen Lenkrad der ästhetische Eindruck dadurch beeinträchtigt wird, daß zwischen der Ummantelung der Speichen einerseits und der Abdeckung der Gassack-Aufprallschutz-Baueinheit andererseits Spalte bestehen.

Es ist die Aufgabe der vorliegenden Erfindung, daß eingangs beschriebene Sicherheitslenkrad so zu gestalten, daß dein Anforderungsprofil hinsichtlich der ästhetischen Erfordernisse Genüge getan wird.

Die Lösung dieser Aufgabe besteht aus einem Sicherheitslenkrad, das die Merkmale des Anspruchs 1 aufweist.

Weitere Ausgestaltungen des Sicherheitslenkrads gemäß Anspruch 1 sind darin zu sehen, daß die mit der Nabe verbundenen Speichenabschnitte als Deformationselemente ausgebildet sind und die in den Unteransprüchen 3 bis 6 beschriebene Gestalt besitzen können.

Bei einem solchen Sicherheitslenkrad sind in vorteilhafter Weise die technischen und ästhetischen Erfordernisse in einem Konzept vereint, wobei ein zusätzlicher Aufprallschutz dadurch gegeben ist, daß mit der Nabe verbundenen Speichenabschnitte als Deformationselemente dienen.

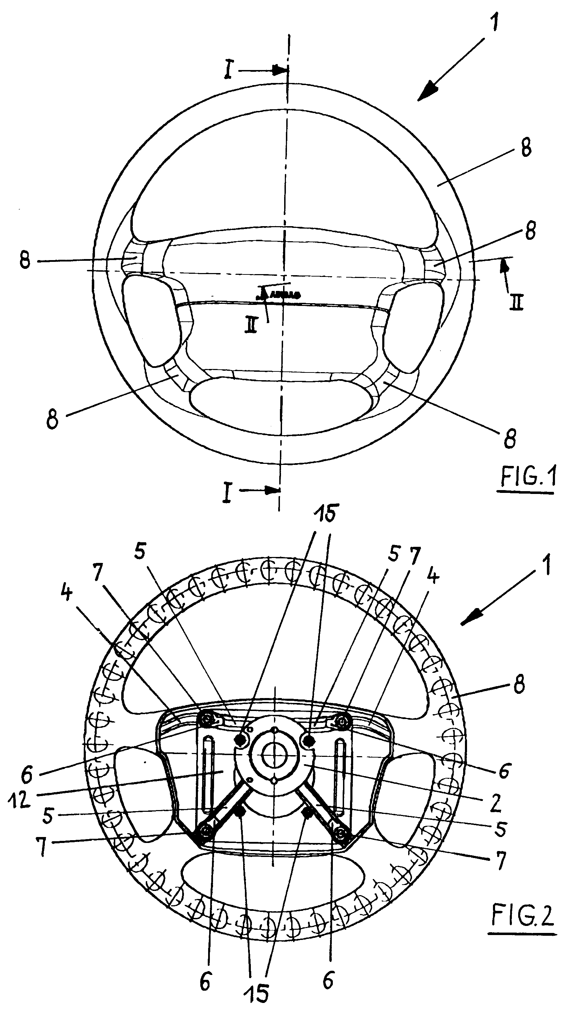

Die Erfindung ist in den Zeichnungen beispielhaft dargestellt und wird nachfolgend näher erläutert. Es zeigen
Fig. 1 eine Draufsicht auf die Vorderseite des Lenkrads
Fig. 2 eine Draufsicht auf die Rückseite des Lenkrads

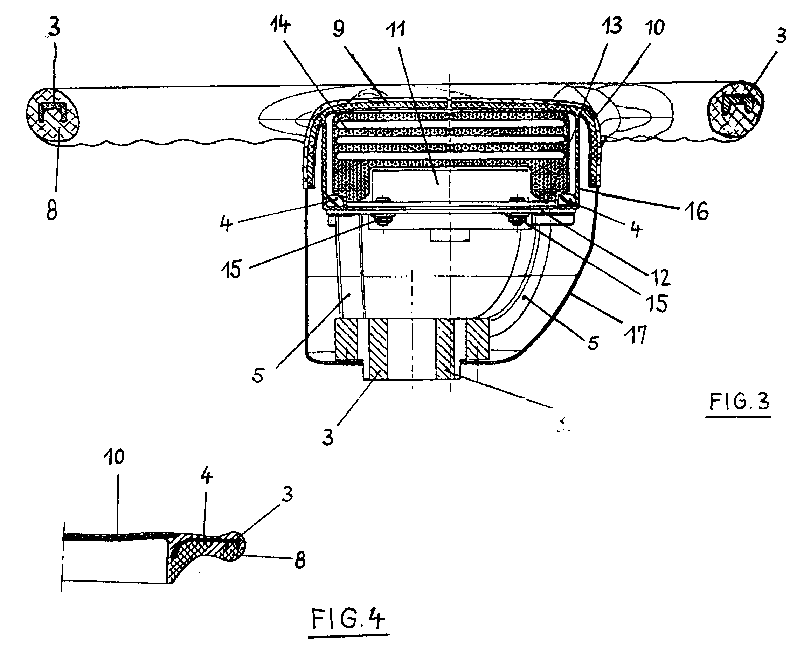

Fig. 3 einen Längsschnitt durch das Lenkrad entlang der Schnittlinie II - II der Fig. 1
Fig. 4 einen Längsschnitt durch das Lenkrad entlang der Schnittlinie I - I gemäß Fig. 1
Bei dem Lenkrad (1), dessen Nabe (2) gegenüber der Ebene des Kranzes (3) versenkt ist, bestehen die Speichen jeweils aus einem mit dem Kranz (3) und einem mit der Nabe (2) verbundenen Abschnitt (4, 5). Die mit Laschen (6) versehenen freien Enden der Speichenabschnitte (4, 5) sind mittels Durchsteckschrauben (7) miteinander verspannt. Der Kranz (3) und die an diesen angrenzenden Bereiche der mit dem Kranz (3) verbundenen Speichenabschnitte (4) besitzen eine Ummantelung (8) aus Polyurethan-Integralschaum, die stoffschlüssig in die durch eine Einlage (9) aus hartem Kunststoff verstärkte Abdeckkappe (10) aus Polyurethan-Integralschaum für die in dem Lenkrad integrierte Airbag-Baueinheit übergeht. Die Airbag-Baueinheit besteht aus dem mit dem Gasgenerator (11) verbundenen Generatorträgerblech (12), das zwischen den Laschen (6) der miteinander verspannten freien Enden der Speichenabschnitte (4, 5) eingespannt ist und mit dem Flanschblech (13) für die Halterung des in mehreren Lagen auf und um den Gasgenerator (11) eingefalteten Gassacks (14) über Durchsteckschrauben (15) in der Weise verbunden ist, daß die die Gaseintrittsöffnung begrenzende Randzone des Gassacks (14) zwischen den Generatorträgerblech (12) und dem Flanschblech (13) eingeklemmt ist. Mit der Unterseite der Abdeckkappe (10) ist stoffschlüssig ein den eingefalteten Gassack (14) umgebender Mantel (16) verbunden, dessen nabenseitiger freier Rand rechtwinkelig nach innen abgebogen und zwischen dem Generatorträgerblech (12) und den Speichen eingeklemmt ist. Mit der Unterseite der Nabe (2) und dem nabenseitigen Rand der Abdeckkappe (10) ist eine topfförmige Verkleidung (17) verklipst.

Nach der durch Spritzen erfolgten Herstellung der Ummantelung (8) für den Kranz (3) und für die Speichenabschnitte (4) sowie der Abdeckkappe (10) wird die aus dem Gasgenerator (11), dem Generatorträgerblech (12), dem Flanschblech (13) und dem eingefalteten Gassack (14) bestehende Airbag-Baueinheit in den von dem mit der Abdeckkappe (10) verbundenen Mantel (11) umschlossenen Hohlraum eingesetzt und danach die Laschen (6) der mit der Nabe (2) verbundenen Speichenabschnitte (5) mit den Laschen (6) der mit dem Kranz (3) verbundenen Speichenabschnitte (4) von der Rückseite des Lenkrads her mittels Durchsteckschrauben (7) verspannt, und dabei gleichzeitig das Generatorblech (12) zwischen den Laschen (6) eingeklemmt.

## Patentansprüche

1. Sicherheitslenkrad (1) für Straßenfahrzeuge, insbesondere für Personenkraftwagen, bei dem die Nabe (2) gegenüber der Ebene des Kranzes (3) versenkt und in das eine Airbag-Baueinheit, bestehend aus einem Gasgenerator (11), einem mit dem Gasgenerator verbundenen an den Speichen befestigten Trägerelement (12), einem auf und/oder um den Gasgenerator eingefalteten Gassack (14) und einem mit dem Trägerelement verspannten, den Gassack mit der die Gasdurchtrittsöffnung begrenzenden Randzone einklemmenden Flansch (13) integriert ist, wobei die an den Kranz angrenzenden Bereiche der Speichen eine Ummantelung (8) und die Airbag-Baueinheit eine kappenförmige Abdeckung (10) aus Thermoplast, Polyurethan oder thermoplastischem Elastomeren besitzen, dadurch gekennzeichnet, daß die Ummantelung (8) und die Abdeckung (10) stoffschlüssig ineinander übergehen und der Kranz (3) sowie die Nabe (2) mit Speichenabschnitten (4, 5) verbunden sind, zwischen denen jeweils eine Formschluß- oder Schraubverbindungen besteht.

2. Sicherheitslenkrad nach Anspruch 1, dadurch gekennzeichnet, daß die mit der Nabe (2) verbundenen Speichenabschnitte (5) als Deformationselemente ausgebildet sind.

3. Sicherheitslenkrad nach einem der Ansprüche 1 und 2, dadurch gekennzeichnet, daß die Speichenabschnitte (5) jeweils aus einem im Verhältnis zu seinen Querabmessungen langen prismatischen geraden unter achsial wirkender Drucklast in Richtung der Achse des größeren Hauptträgheitsmoments nicht-elastisch ausknickbarem Metallstab bestehen, der wenigstens auf derjenigen seiner beiden Breitseiten, die senkrecht zur Achse des größeren Hauptträgheitsmoments steht und der gewünschten Ausknickrichtung gegenüber liegt, eine quer zur Längsabmessung verlaufende Gradverzahnung besitzt, so daß sich bei der gewünschten Ausknickbewegung die Zähne der Gradverzahnung aufeinander abstützten.

4. Sicherheitslenkrad nach einem der Ansprüche 1 und 2, dadurch gekennzeichnet, daß die mit der Nabe (2) verbundenen Speichenabschnitte (5) durch ein topfförmiges Deformationselement ersetzt sind.

5. Sicherheitslenkrad nach einem der Ansprüche 1 und 2, dadurch gekennzeichnet, daß mit der Nabe (2) verbundenen Speichenabschnitte (6) durch ein rohrförmiges Deformationsglied aus Blech ersetzt sind, das rombenförmige Ausschnitte besitzt und dessen gitterförmige Struktur mehrere von einem gemeinsamen Punkt ausgehende Bänderpaare bildet, die schraubenförmige Wicklungen gleicher Steigung und entgegengesetzten Steigungssinns ergeben, wobei die Kreuzungsstellen der Bänderpaare gleichmäßig über den Umfang verteilt sind.
